**Europäisches Patentamt**

**European Patent Office**

**Office européen des brevets**

(19)

(11) Veröffentlichungsnummer : **0 152 755 B1**

(12) **EUROPÄISCHE PATENTSCHRIFT**

(45) Veröffentlichungstag der Patentschrift : 20.09.89

(51) Int. Cl.⁴ : **B 01 D 53/14, C 10 K 1/16**

(21) Anmeldenummer : 85100317.8

(22) Anmeldetag : 15.01.85

(54) **Verfahren zur Abtrennung und gleichzeitigen Gewinnung saurer Verunreinigungen aus Gasgemischen.**

(30) Priorität : 19.01.84 DE 3401773

(43) Veröffentlichungstag der Anmeldung : 28.08.85 Patentblatt 85/35

(45) Bekanntmachung des Hinweises auf die Patenterteilung : 20.09.89 Patentblatt 89/38

(84) Benannte Vertragsstaaten :
BE DE FR GB IT NL

(56) Entgegenhaltungen :
DE-A- 2 312 754
DE-A- 3 239 605
US-A- 2 757 754
A.L. KOHL et al.: "Gas Purification", 4. Ausgabe, 1985, Seiten 840-845, Gulf Publishing Co., Houston, US

(73) Patentinhaber : **Linde Aktiengesellschaft**
**Abraham-Lincoln-Strasse 21**
**D-6200 Wiesbaden (DE)**

(72) Erfinder : **Ranke, Gerhard, Dipl. -Ing.**
**Feichtetstrasse 6**
**D-8134 Pöcking (DE)**
Erfinder : **Schrader, Ulrich, Dr. Dipl.Ing.**
**Otto-Dischner-Weg 20**
**D-8000 München 60 (DE)**

(74) Vertreter : **Schaefer, Gerhard, Dr.**
**Linde Aktiengesellschaft Zentrale Patentabteilung**
**D-8023 Höllriegelskreuth (DE)**

## Beschreibung

Die Erfindung betrifft ein Verfahren zur Abtrennung und gleichzeitigen Gewinnung saurer Verunreinigungen, insbesondere $CO_2$, aus Gasgemischen mit einem physikalisch wirkenden Lösungsmittel durch Druckwäsche, bei dem der Druck über dem beladenen Lösungsmittel zur Ausgasung von koabsorbierten Inerten auf einen ersten Zwischendruck und anschließend zur Abtrennung der Hauptmenge des absorbierten $CO_2$ aus dem beladenen Lösungsmittel stufenweise weiter gesenkt und schließlich zur Entfernung des Rest-$CO_2$ auf den Regenerierenddruck gebracht wird, wonach das Lösungsmittel zur Druckwäsche zurückgeführt wird.

Ein derartiges Verfahren wird im Rahmen der Herstellung von Harnstoffsynthesegas in der DE-A-32 39 605.8 von der Anmelderin bereits vorgeschlagen. Dabei wird der Druck über dem beladenen Lösungsmittel nach der Teilentspannung auf einen Zwischendruck gebracht und das Lösungsmittel zur Teilausgasung von $CO_2$ angewärmt. Das ausgasende $CO_2$ fällt somit unter Druck an und kann nach Abkühlung z. B. zur Harnstoffsynthese herangezogen werden. Das teilregenerierte Lösungsmittel wird einer letzten drucklosen Regenerierstufe unterworfen. Dort wird das Lösungsmittel zur Entfernung des Rest-$CO_2$ entweder mittels eines Reboilers angewärmt oder durch Anwendung von Vakuum von dem Rest-$CO_2$ befreit.

Bei der erstgenannten Variante ergeben sich jedoch die Nachteile eines hohen Dampfbedarfes im Reboiler zur Anwärmung des Lösungsmittels und zur Deckung der restlichen Entgasungswärme sowie von Fremdkälte zum Decken der Austauschverluste und zusätzlich eines Kältebedarfs zum Kompensieren der Pumpenerwärmung und Rohgasabkühlung. Hiermit verbunden ist ein zusätzlicher apparativer Aufwand, wie Wärmetauscher, Reboiler und Kondensator mit Abscheider und Kondensatpumpe.

Die Verwendung von Vakuum erfordert ebenfalls eine zusätzliche Maschine mit relativ hohem spezifischem Energiebedarf. Die erreichbare Restbeladung ist durch den Saugdruck des Vakuumkompressors festgelegt. Somit kann das Rohgas in der Wäsche nicht so gut gereinigt werden. Die $CO_2$-Restbeladung kann gesenkt werden durch Anwärmung des Lösungsmittels mit Abwärme, doch dann treten ähnliche Nachteile wie bei der Warmregenerierung auf.

Der vorliegenden Erfindung liegt daher die Aufgabe zugrunde, ein Verfahren der eingangs genannten Art so auszugestalten, daß auf energie- und kostengünstige Weise Kohlendioxid aus dem Lösungsmittel entfernt wird unter gleichzeitiger Gewinnung von Rein-$CO_2$.

Diese Aufgabe wird erfindungsgemäß dadurch gelöst, daß eine Teilmenge des gewaschenen Gases auf den Regenerierenddruck des Lösungsmittels entspannt und als Strippgas zur Entfernung des Rest-$CO_2$ aus dem Lösungsmittel verwendet wird.

Mit diesem Verfahren wird $CO_2$ durch Entspannung von dem beladenen Lösungsmittel abgetrennt und als Produkt gewonnen. Die Strippung ersetzt die Regeneriersäule mit Reboiler oder die Anwendung von Vakuum. Mit der Strippung kann eine ausreichende Reinheit des Gases von $CO_2$ erreicht werden. Die Konzentration des $CO_2$ im $CO_2$-Produkt kann durch Absenkung des Druckes bei der ersten Zwischenentspannung den geforderten Bedingungen angepaßt werden. Die Reinheit des Produktgases bezüglich $CO_2$ kann durch Vergrößerung der Strippgasmenge, also der Teilmenge des gewaschenen Gases, und der Bodenzahl in der Säule verbessert werden. Durch Einbau von Expansionsturbinen bei der Entspannung des beladenen Lösungsmittels und des Produkt- bzw. Strippgases kann überdies der Energiebedarf der Anlage weiter gesenkt werden. Das beladene Lösungsmittel wird stufenweise entspannt und anschließend gestrippt. Somit ist für die Endregenerierung des Lösungsmittels keine Wärmezufuhr und auch kein Wärmetauscher für beladenes gegen regeneriertes Lösungsmittel erforderlich.

In Weiterbildung des Erfindungsgedankens ist vorgesehen, daß das Strippgas zusammen mit dem ausgestrippten $CO_2$ auf den Rohgasdruck verdichtet und dem Rohgas vor der Wäsche zugemischt wird. Mit dieser Verfahrensführung wird erreicht, daß das in die Wäsche zurückgeführte $CO_2$ ausgewaschen und bei der nachfolgenden Entspannung in reiner Form gewonnen wird. Damit vergrößert die Strippung mit Rückführung des Strippgases und des ausgestrippten Rest.$CO_2$ die $CO_2$-Ausbeute.

Gemäß einer weiteren Ausführungsform des erfindungsgemäßen Verfahrens ist vorgesehen, das Rohgas vor der Wäsche zu verdichten. Durch diese Maßnahme wird erreicht, daß sich die umgewälzte Lösungsmittelmenge erheblich reduziert. Außerdem kann eventuell der Rückführverdichter eingespart werden, da das Strippgas und das ausgestrippte Rest-$CO_2$ dann zusammen mit dem Rohgas verdichtet wird.

Das erfindungsgemäße Verfahren kann bei allen physikalischen Lösungsmitteln angewendet werden, wie beispielsweise Alkoholen, Ketonen, N-Methylpyrrolidon, Polyäthylenglykoläthern, Dimethylformamid, Glykolen, Butyrolacton. Das gewonnene Rein-$CO_2$ kann in der Lebensmittelchemie oder bei der Enhanced Oil Recovery eingesetzt werden.

Im folgenden sei das erfindungsgemäße Verfahren anhand eines schematisch dargestellten Ausführungsbeispiels näher erläutert.

Das Rohgas in Leitung 1 wird in einer Waschsäule 2 mit regeneriertem Lösungsmittel, das der Säule im oberen Bereich über Leitung 3 aufgegeben wird, gewaschen. Dabei wird $CO_2$ bis auf einen Restgehalt von ca. 100 ppm ausgewaschen. Die erreichbare Reinheit ist eine Funktion der Lösungsmittelmenge und -reinheit, der Temperatur und der Bodenzahl bzw. Schütthöne.

Neben $CO_2$ werden entsprechend der jeweiligen Löslichkeit im Lösungsmittel auch andere Bestandteile des Rohgases gelöst, gleichzeitig wird auch Wasser teilweise ausgewaschen.

Am Kopf der Waschsäule 2 wird gewaschenes Gas über Leitung 4 abgezogen, in einem Wärmetauscher 25 gegen Rohgas angewärmt und zumindest teilweise über Leitung 26 abgegeben.

Das am Sumpf der Waschsäule über Leitung 5 abgezogene beladene Lösungsmittel wird zunächst in einem Ventil 6 in einen Abscheider 7 auf einen Zwischendruck entspannt und die dabei freiwerdenden Gase, bevorzugt $H_2$, über Leitung 8 über einen Rückführverdichter 9 ins Rohgas zurückgeführt.

Dabei erfüllt dieser Rückführverdichter zwei Aufgaben : Erhöhung der $H_2$-Ausbeute und gleichzeitig Anhebung der $CO_2$-Konzentration im Produkt-$CO_2$.

Anschließend wird das Lösungsmittel in Leitung 10 schrittweise in Ventilen 11, 12 in Abscheider 13, 14 entspannt. Dabei wird jeweils $CO_2$ freigesetzt, welches über Leitungen 15, 16 abströmt und als Produkt entweder in der Lebensmittelchemie oder Enhanced Oil Recovery eingesetzt wird. Die Anzahl der Entspannungsstufen und eventuell vorhandener Verdichterstufen wird sinnvollerweise aufeinander abgestimmt.

Nach Entspannung auf einen Druck von etwa 1,3 bar wird das Lösungsmittel, welches immer noch $CO_2$ enthält, einer Strippsäule zugeführt und dort mit einer über Leitung 18 herangeführten Teilmenge des gewaschenen Produktes behandelt. Dabei wird das gewaschene Gas vor Einführen in die Strippsäule in einem Ventil 19 entspannt. Vom Kopf der Strippsäule 17 wird Rest-$CO_2$ zusammen mit dem Strippgas über Leitung 20 abgezogen und nach Verdichtung in Rückführverdichter 9 über Leitung 21 dem Rohgasstrom in Leitung 1 zugemischt. Das im Sumpf der Strippsäule 17 über Leitung 22 abgezogene Lösungsmittel wird auf den Druck der Waschsäule gepumpt, 23. In einem Kühler 24 wird die mit dem Rohgas und den Pumpen zugeführte Wärme abgeführt.

Zahlenbeispiel :

Gewinnung von $CO_2$ aus einem Rohgas, welches zur Gewinnung von $H_2$ durch katalytische Umsetzung von Erdgas in einem Steamreformer gewonnen wurde. Vor der Wäsche muß das CO in einer Konvertierung noch in $H_2$ + $CO_2$ umgesetzt werden.

| Rohgasmenge : | | 4 000 kmol/h |
|---|---|---|
| Druck : | | 22 bar |
| Zusammensetzung : | $H_2$ | 77 mol % |
| | $N_2$ + CO + $CH_4$ | 5,3 mol % |
| | $CO_2$ | 17,7 mol % |

Produktgas (nach Abzweigung des Strippgases)

| Menge : | | 3 274 kmol/h |
|---|---|---|
| Druck : | | 20,5 bar |
| Zusammensetzung : | $H_2$ | 93,8 mol % |
| | $N_2$ + CO + $CH_4$ | 6,0 mol % |
| | $CO_2$ | 0,2 mol % |

$CO_2$-Produkt :

| Menge : | | 726 kmol/h |
|---|---|---|
| Druck : | | 1,1 bzw. 3 bar |
| Zusammensetzung : | $H_2$ | 1,0 mol % |
| | $N_2$ + CO + $CH_4$ | 1,7 mol % |
| | $CO_2$ | 97,3 mol % |

Strippgasmenge zur Strippsäule :

| Menge : | 340 kmol/h |
|---|---|

Zusammensetzung wie Produktgas

Gesamte Rückführung

| | |
|---|---|
| Menge : | 752 kmol/h |
| Druck : | 22 bar |
| Zusammensetzung : | H₂ 49,7 mol % |

N₂ + CO + CH₄ 3,8 mol %
CO₂ 46,5 mol %

Lösungsmittel : Polyäthylenglykoläther

Menge : 1 340 m³/h

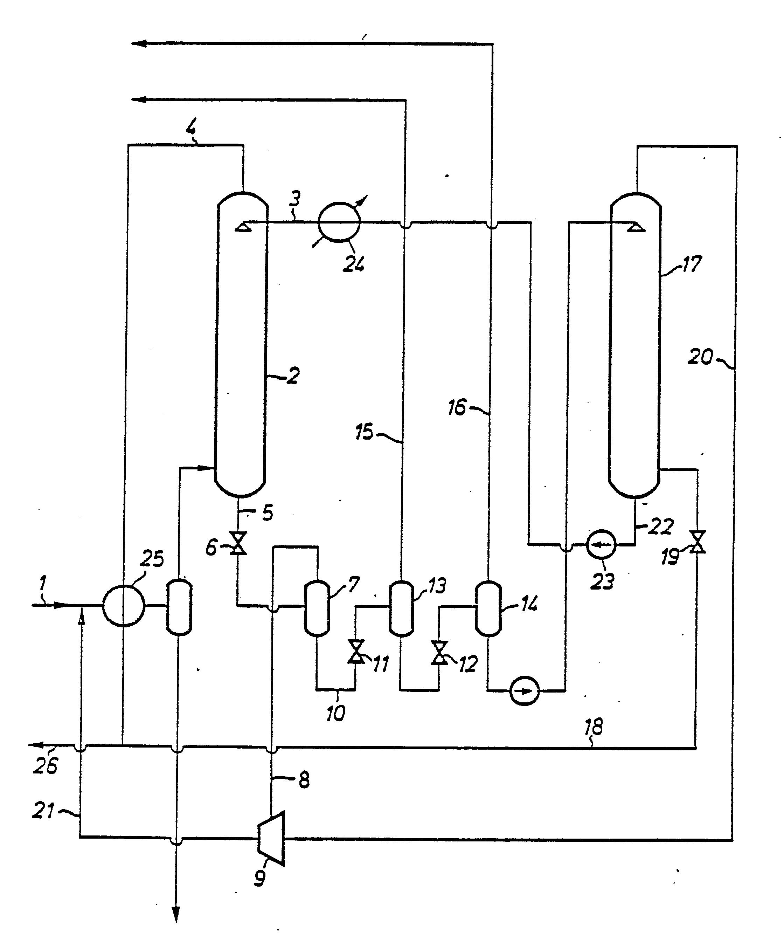

**Patentansprüche**

1. Verfahren zur Abtrennung und gleichzeitigen Gewinnung saurer Verunreinigungen, insbesondere CO₂, aus Gasgemischen mit einem physikalisch wirkenden Lösungsmittel durch Druckwäsche, bei dem der Druck über dem beladenen Lösungsmittel zur Ausgasung von koabsorbierten Inerten auf einen ersten Zwischendruck und anschließend zur Abtrennung der Hauptmenge des absorbierten CO₂ aus dem beladenen Lösungsmittel stufenweise weiter gesenkt und schließlich zur Entfernung des Rest-CO₂ auf den Regenerierenddruck gebracht wird, wonach das Lösungsmittel zur Druckwäsche zurückgeführt wird, dadurch gekennzeichnet, daß eine Teilmenge des gewaschenen Gases auf den Regenerierenddruck des Lösungsmittels entspannt und als Strippgas zur Entfernung des Rest-CO₂ aus dem Lösungsmittel verwendet wird.

2. Verfahren nach Anspruch 1, dadurch gekennzeichnet, daß das Strippgas zusammen mit dem ausgestrippten Rest-CO₂ auf den Rohgasdruck verdichtet und dem Rohgas vor der Wäsche zugemischt wird.

3. Verfahren nach Anspruch 1 oder 2, dadurch gekennzeichnet, daß das Rohgas vor der Wäsche verdichtet wird.

**Claims**

1. A process for the separation and simultaneous recovery of acid impurities, in particular CO₂, from gas mixtures containing a physically active solvent by pressure scrubbing, where the pressure above the charged solvent is reduced to a first intermediate pressure in order to de-gas co-absorbed inert substances and is then further reduced stepwise to separate the majority of the absorbed CO₂ from the charged solvent, and is finally brought to the regeneration pressure in order to remove the residual CO₂, whereupon the solvent is returned to the pressure scrubbing step, characterised in that a part of the scrubbed gas is expanded to the regeneration pressure of the solvent and is used as stripping gas to remove the residual CO₂ from the solvent.

2. A process as claimed in Claim 1, characterised in that the stripping gas is compressed, together with the stripped-out residual CO₂, to the crude gas pressure and is admixed with the crude gas prior to the scrubbing step.

3. A process as claimed in Claim 1 or 2, characterised in that the crude gas is compressed prior to the scrubbing step.

**Revendications**

1. Procédé pour séparer et en même temps récupérer des polluants ou impuretés acides, notamment du CO₂, contenus dans des mélanges gazeux, par lavage sous pression à l'aide d'un solvant à action physique, dans lequel la pression du solvant chargé d'impuretés est abaissée à une première pression intermédiaire pour permettre la séparation d'un gaz formé des inertes coabsorbés, puis subit une réduction étagée pour permettre la séparation de la plus grande partie du CO₂ absorbé contenu dans le solvant chargé d'impuretés et enfin, est ramenée à la pression de régénération pour recueillir la plus grande partie du CO₂ résiduel, après quoi la pression du solvant est ramenée à la pression du lavage, ce procédé étant caractérisé en ce qu'une partie des gaz lavés est détendue à la pression de régénération du solvant et est employée comme gaz d'entraînement du CO₂ résiduel contenu dans le solvant.

2. Procédé selon la revendication 1, caractérisé en ce que le gaz d'entraînement ainsi que le CO₂

résiduel entraîné sont comprimés à la pression du gaz brut et ajoutés à ce gaz brut préalablement au lavage.

3. Procédé selon la revendication 1 ou 2, caractérisé en ce que le gaz brut est comprimé préalablement au lavage.